(19) Europäisches Patentamt
European Patent Office
Office européen des brevets

(11) EP 0 776 354 B1

(12) **EUROPEAN PATENT SPECIFICATION**

(45) Date of publication and mention of the grant of the patent:
**12.01.2000 Bulletin 2000/02**

(21) Application number: **95929839.9**

(22) Date of filing: **10.08.1995**

(51) Int Cl.[7]: **C09K 19/38**, G11B 7/24, G11B 7/00, G02F 1/1335, G11B 7/26, C08G 65/22

(86) International application number:
**PCT/EP95/03176**

(87) International publication number:
**WO 96/06145 (29.02.1996 Gazette 1996/10)**

(54) **LIQUID-CRYSTALLINE POLYETHERS**

FLÜSSIGKRISTALLINE POLYETHER

POLYETHERS LIQUIDES CRISTALLINS

(84) Designated Contracting States:
**BE CH DE FR GB IT LI NL SE**

(30) Priority: **19.08.1994 NL 9401342**
**14.03.1995 NL 9500503**

(43) Date of publication of application:
**04.06.1997 Bulletin 1997/23**

(73) Proprietor: **Akzo Nobel N.V.**
**6824 BM Arnhem (NL)**

(72) Inventors:
- **WIT DE, Paulus, Pieter**
  **NL-6931 CK Westervoort (NL)**
- **REESINK, Johan, Bernard**
  **NL-6921 LG Duiven (NL)**
- **GOETHALS, Eric, Jozef**
  **B-9750 Zingem (BE)**
- **LIBISZOWSKI, Jan, Antoni**
  **PL-90-248 Lodz (PL)**
- **MIJS, Willem, Jacobus**
  **NL-6891 AH Rozendaal (NL)**
- **STEENBERGEN, Andre**
  **NL-6814 BN Arnhem (NL)**

(74) Representative: **Schalkwijk, Pieter Cornelis et al**
**AKZO NOBEL N.V.**
**Patent Department (Dept. APTA)**
**P.O. Box 9300**
**6800 SB Arnhem (NL)**

(56) References cited:
**EP-A- 0 103 297** **EP-A- 0 469 492**
**WO-A-90/15092**

- **MAKROMOLEKULARE CHEMIE, RAPID COMMUNICATIONS, vol. 14, no. 4, April 1993 BASEL CH, pages 251-259, E.AKIYAMA ET AL. 'synthesis and thermal properties of side-chain type liquid-crystalline polymers with poly(glycidyl ether) backbones' cited in the application**
- **POLYMER BULLETIN, vol. 30, no. 3, March 1993 DE, pages 249-256, P.A.TUAN ET AL. 'synthesis and polymerization of liquid-crystalline a-oxiranes containing 4-cyanobiphenyl and p-methoxyphenyl benuoate mesogenic groups'**
- **MAKROMOLEKULARE CHEMIE, , vol. 193, no. 5, May 1992 BASEL CH, pages 1109-1116, F.LAGARDE ET AL. 'cationic polymerization of 1,2 epoxy-3-nitropropane in the presence of ethylene glycol'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 776 354 B1

## Description

The present invention is in the field of liquid-crystalline polymers, notably liquid-crystalline polyethers. Liquid-crystalline polyethers are known from EP-A2-0 274 128, Makromol. Chem. Rapid. Commun. 14 (1993), 251-259, and Eur. Polym. J. Vol. 21, No. 3 (1985), 259-264. These publications disclose liquid-crystalline polyethers obtained via cationic ring-opening polymerisation. However, all of the described liquid-crystalline polyethers have a Tg in the range of -29° to 12°C and in consequence are unsuitable for use in various optical applications, such as the retardation layers of LCDs, optical date storage on, e.g., compact discs and digital films (tapes), and analog data storage. Also known are liquid-crystalline polyethers obtained by substitution of the Cl groups of polyepichlorohydrin. While this process does make it possible to obtain a high Tg, said Tg is dependent on the degree of substitution and hard to reproduce.

The present invention provides liquid-crystalline polyethers having Tgs of room temperature and above (23-70°C). The Tg and/or the stability of those polyethers having a Tg of about roomtemperature may be easily increased.

The polyethers according to the invention are obtained by polymerising a monomer mixture comprising:

a) an OH-containing compound and
b) a mesogenic group-containing mono-epoxide.

Polyethers obtained from such a monomer mixture were found to have a high Tg even though their molecular weight is not especially high. The viscosity of the polymer increases with higher molecular weights. Since the use of liquid-crystalline polyethers in optical applications such as data storage and retardation layers requires that the polyethers be well-oriented, it is of the essence not to have a too high viscosity between Tg and Tc (the temperatures at which the orientation has to take place), since otherwise it will be impossible to achieve a homogeneous orientation, or else the orientation will proceed so slowly as to make the application commercially unviable.

When polymerising mesogenic group-containing mono-epoxides and OH-containing compounds, the reaction is primarily by the so-called activated monomer mechanism. In this reaction use is made of catalysts for cationic polymerisation, such as $HBF_4$, $BF_3OEt_2$, $HSbF_6$, $HPF_6$, and the like. For more detailed information on this type of polymerisation mechanism reference may be had to Makromol. Chem., Makromol. Symp. 13/14 (1988), 203-210, Makromol. Chem., Makromol. Symp. 32 (1990), 155-168, and ACS Pol. Preprints Vol. 31, No. 1 (1990), 89-90. It was found that when a monomer mixture having a ratio of OH-containing compound to mesogenic group-containing mono-epoxide in the range of 1:10 to 1:2, is employed the activated monomer mechanism still dominates the polymerisation process to a large extend. This has as a result that side reactions, notably the formation of cyclic oligomers, are suppressed to such an extend that polymers of a narrow molecular weight distribution are formed. Furthermore, it was found that when employing a ratio of 1:5 to 1:2 the cyclic oligomer was hardly or not detectable at all. Moreover, polyethers formed almost exclusively by the activated monomer mechanism are essentially OH-terminated, which gives advantages when the polyethers require further polymerisation or cross-linking, for instance to obtain a higher Tg and/or enhanced stability.

In EP-A2-0 469 492 adducts are mentioned which are prepared by reacting epoxy resins having more than one vicinal epoxide group with a compound containing two or more hydrogen atoms reactive with an epoxide group, vinylising the formed adduct, and copolymerising the vinylised adduct with ethylenically unsaturated monomers, wherein one or more of the compounds used contains meosogenic groups. The adduct described in said publication are used for thermo-settable mixtures which can be used for coatings, castings, encapsulations, extrusions, mouldings, pultrusions, electrical and structural laminates or composites. The use of these adducts for optical applications is not mentioned or suggested in this publication. The mesogenic groups are incorporated in the adducts to improve the mechanical prooerties of the resulting thermosets.

In the polyethers according to the present invention use may be made of suitable mono OH-containing compounds according to the formula below:

$$HO - (Y)_m - Z$$

wherein:

- Z stands for -H, $-O-C(O)-CH=CH_2$, or $-O-C(O)-C(CH_3)=CH_2$,
- Y stands for $-CH_2-$, $C(CH_3)_2-$, $-CH(CH_3)-$, or $-HC[-(CH_2)_m- O - \varphi^1- (Q)_n- \varphi^2 -R^1]-$, wherein the various Y groups may be the same or different,
- m stands for an integer from 0-6, with the proviso that compounds having an oxygen atom at the $\alpha$ or $\beta$ position vis-

à-vis the OH group are excluded,

Q stands for -C(O)-O- -C=C-, or -O-C(O)-,

$R^1$ stands for -O-$R^2$, -$NO_2$ -CN, or -$R^2$,

$R^2$ stands for an alkyl group having 1 to 15 carbon atoms,

x stands for an integer from 0-6,

k stands for an integer from 0-6, with the proviso that k is not 0 or 1 if $R^1$ = -O-$R^2$,

$\varphi^1$ stands for a substituted or unsubstituted phenyl,

$\varphi^2$ stands for a phenyl,

n stands for 0 or 1.

Especially suitable di OH-containing compounds are those according to the formulae below:

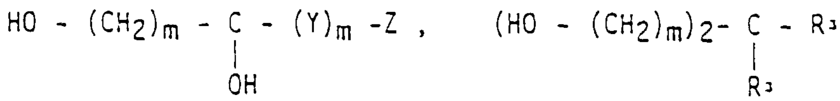

$$HO - (Y)_m - O - \varphi^1 - (\varphi^2)_n - O - (Y)_m - OH,$$

$$HO - (Y)_m - O - \varphi^1 -C(CH_3)_2 - \varphi^2 - O - (Y)_m - OH$$

wherein:

$R^3$ stands for an alkyl group having 1-6 carbon atoms, and Z, Y, $\varphi^1$, $\varphi^2$,

n and m have the same meaning as in the formula above, with the m numbers being the same or different.

If the OH-containing compound is an acrylate alcohol, liquidcrystalline polyethers containing acrylate groups are obtained. These polyethers containing acrylate groups can be further polymerised with the aid of a UV-initiator, or optionally after the addition of di-and triacrylates, cross-linked with the aid of UV-irradiation after orientation. In this way the polyether's stability can be enhanced. Alternatively, these poiyethers containing acrylate groups can be thermally polymerised, or copolymerised with monoacrylates such as butyl acrylate and ethyl acrylate to increase the molecular weight. Furthermore, these polyethers containing acrylate groups can be thermally copolymerised with di- or triacrylates to create a network.

The polyethers obtained by reacting OH-containing compounds with mesogenic group-containing epoxides are essentially OH-terminated. The polyethers' OH end groups can be converted with, say, (meth)acrylic acid or isocyanatoethyl methacrylate into (meth)acrylate end groups. The thus obtained polymers can be thermally or photochemically polymerised or cross-linker, optionally after the addition of mono-, di-or tri-(meth)acrylates. By this polymerisation or cross-linking an increased Tg and/or enhanced stability can be achieved, thus rendering polyethers having a Tg of about room temperature suitable for uses requiring a higher stability after orientation.

Examples of $\Phi^1$ and $\Phi^2$ include:

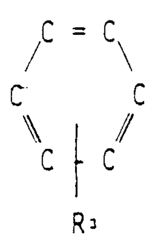

wherein $R^3$ stands for an alkyl group having 1-5 carbon atoms.

Suitable mesogenic group-containing mono-epoxides are those satisfying the formula below:

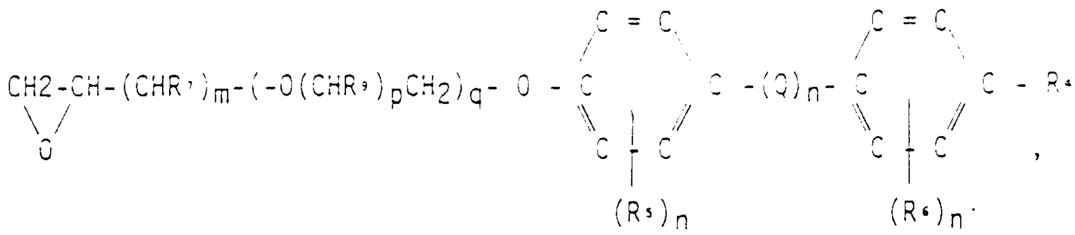

,

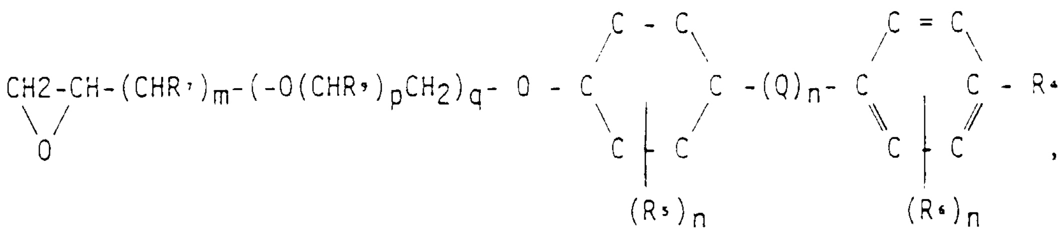

,

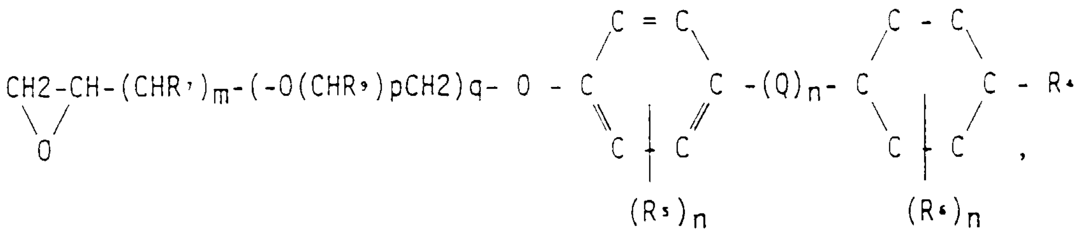

,

wherein

Q stands for -C(O)-O-, -C=C-, -O-C(O)-, -N=C-, -C=N-, -C≡C- or -N=N-,
$R^4$ stands for -O-$R^8$, COO-$R^8$, OCO-$R^8$, -$NO_2$, -CN, -HC=C$(CN)_2$, -C(CN)=C$(CN)_2$ or -$R^8$,
$R^5$ stands for an alkyl group having 1-5 carbon atoms,
$R^6$ stands for an alkyl group having 1-5 carbon atoms,
$R^7$ stands for -H or $CH_3$,
p is 1-7,
q is 0-3,
$R^8$ stands for a group having 1-15 carbon atoms,
$R^9$ stands for -H or alkyl, and n and m have the same meaning as in the formulae above.

Of course, it is also possible to employ mixtures of different mono-epoxides and OH-containing compounds in the monomer mixture. It is also possible to employ upto 25 % non-mesogenic monoepoxides in the monomer mixture.
Examples of $R^8$ groups include:

$-(CH_2)_x-O-C(O)-C(CH_3)=CH_2$,
$-(CH_2)_x-O-C(O)-CH=CH_2$,
$-(CH_2)_x-CH_3$,
$-CH_2-CH(CH_3)-(CH_2)_x-CH_3$,
$-CH(CH_3)-(CH_2)_x-CH_3$, wherein x= 1-14.

Some of these $R^8$ groups contain an asymmetrical carbon atom. The use of chiral (exclusively laevorotatory or dextrorotatory) $R^8$ groups is advantageous in a number of applications, e.g., in LCD retardation layers.
Particular preference is given to liquid-crystalline polyethers containing a polable mesogenic group. The term "polable" in this context means, orientable under the influence of an electric field. Polable groups contain one or more permanent dipole moments directed more or less along the long axis of the mesogenic group, such that there is positive di-electric anisotropy. This makes it possible to orient films of the liquid-crystalline polyether using a static electric field. As $R^4$ polable mesogenic groups contain, e.g., a -CN or -$NO_2$ group. For more detailed information on polability reference may be had to Vertogen and de Jeu, Thermotropic liquid crystals, fundamentals (Springer, 1987), pp. 195-201.

As was mentioned above, the liquid-crystalline polyethers according to the invention are especially suited to be used in optical applications. For instance, the liquid-crystalline polyethers according to the invention are pre-eminently suited to be used in LCD retardation layers. The functioning of retardation layers is described in EP-A1-0 565 182 and EP-A3-0 380 338, which describe liquid-crystalline polymers for use in retardation layers. For further elucidation reference may be had to these patent publications. The liquid-crystalline polyethers according to the invention have a far lower molecular weight than the liquid-crystalline polymers described in EP-A1-0 565 182, and hence a far lower viscosity between Tg and Tc. This low viscosity permits rapid homogeneous arrangement of the liquid-crystalline polyethers into a nematic structure having an angle of rotation as desired. In the case of an angle of rotation of 90° (or -90), the film is called "twisted nematic"; if the angle of rotation is greater, the film is called "supertwisted nematic." In addition, the liquid-crystalline polyethers according to the invention are suitable for use in retardation layers without twist. In that case the orientation of the liquid-crystalline layer will be homeotropical or uniform planar. At angles of rotation exceeding 360° the structure goes through more than one full rotation within a single layer. The length covered by the structure in a full rotation is called the pitch. The liquid-crystalline polyethers according to the invention can be used to make retardation layers which have a thickness of more than five times the pitch. It was even found possible to make retardation layers which have a thickness of 20 times the pitch. The orientation of this type of layers is usually called cholesteric. Because the liquid-crystalline polyethers according to the invention have a Tg of well above room temperature, the (twisted) structure remains properly intact across all of the layer's surface area, and the liquid-crystalline polyether does not have to be incorporated into a rigid cell, as is the case with low-molecular weight liquid-crystalline material. This is especially relevant when using polyethers containing acrylate groups, since such polyethers can be cross-linked after orientation. As mixtures of different OH-containing compounds and epoxides may be used in the monomer mixture, the birefringence and the dispersion of the retardation layers can be exactly matched with the appropriate active liquid-crystalline cell. By varying the mesogenic group the dispersion can be varied. In this way the use of mesogenic groups containing a cyclohexyl group or a bicyclooctane group instead of a phenyl group will make it possible to alter the dispersion. The birefringence can be lowered by reducing the mesogenic group density. The invention is also directed to retardation layers containing liquid-crystalline polyethers according to the invention. The birefringence in retardation layers containing liquid-crystalline polyethers according to the invention was found to exhibit the same temperature dependency as commercial low-molecular weight material for LCDs.

The retardation layers can be prepared as follows: between two orienting substrates is applied a thin layer of liquid-crystalline polyether optionally containing mono-, di- or tri(meth)acrylates. Generally, a thin layer of liquid-crystalline polyether will be provided on either or both of the orienting substrates by means of spin coating, screen printing, meter bar coating, melt coating, or some other conventional coating technique. The two substrates are then placed one on top of the other. To set the thickness of the retardation layer, spacers of a specific diameter may be provided between the two substrates. As a rule, spheres of glass, polymer or silica are used to this end. Next, the whole is heated to a temperature between Tg and Tc (usually to about 10°C below Tc), which causes the polyether to start arranging itself. Acrylate-containing polyethers can be cross-linked with the aid of UV irradiation. On cooling to room temperature the well-ordered structure is frozen in, and a stable film is obtained which retains its shape. The substrates may be of either glass or plastic. If they are of glass, it is preferred to use thin glass substrates of a thickness of 20 to 500 micrometers. This allows retardation layers to be made which are lightweight, thin, and somewhat flexible.

Various techniques are known for making an orienting substrate. For instance, the substrate itself may be rubbed in a single direction. The substrate in that case may be made of, e.g., polyimide, polyvinyl alcohol, glass, etc. Alternatively, the substrate may be provided with a thin orienting layer. This may be a thin polymer layer which can be rubbed, e.g., polyimide, polyvinyl alcohol, etc. Alternatively, this thin orienting layer may be a $SiO_x$ layer evaporated at an angle of less than 90°, usually of 60° or 86°. Generally, a substrate of poor flexibility, such as glass or quartz, is used for $SiO_x$ evaporation. These orienting techniques are known to the skilled person and require no further elucidation here. Of course, it is also possible to employ other orienting techniques.

A twisted structure is obtained by giving one of the two substrates a different orientation direction from that of the other substrate. To control the direction of rotation of the director (to the left or to the right) and/or to obtain an angle of rotation greater than 90°, the liquid-crystalline material is frequently mixed with a chiral material: the so-called chiral dopant. In principle, any optically active compound may be used to this end. As examples may be mentioned cholesterol derivatives and 4-(4-hexyloxy-benzoyloxy) benzene acid 2-octyl-ester. Ordinarily speaking, for application as retardation layers up to 5 wt.% of chiral dopant is employed in relation to the total amount of liquid-crystalline material. Alternatively, some of the compounds in the monomer mixture may be provided with chiral centres. Preferably, this is done by providing the mesogenic group with a chiral chain (group $R^6$) or spacer, since in this way the transition temperatures will hardly if at all be adversely affected. Examples of mesogenic groups with chiral chains have been described above. Since the carbon atom connected to the epoxide group of the mesogenic group at the α-position is asymmetrical also, its chiral version may be used as well. In that case, use is made of an epoxy-containing mesogenic group with a chiral centre in the epoxide group. Of course, the chiral centre may also be located in the OH-containing

compound.

It is not really essential to use two substrates to prepare the retardation layers. If the liquid-crystalline material assumes a sufficiently twisted structure of its own accord, a single substrate will suffice. A sufficiently twisted structure can be obtained if enough chiral dopant is present in the liquid-crystalline material, and the layer thickness is accurately controlled.

As mentioned above, is it also possible to make layers with a very small pitch with the liquid-crystalline polyether according to the invention. These so-called cholesteric layerstcan also be used as cholesteric reflectors or polarisers. In these cases, more chiral dopant or a dopant with a higher helical twist power is employed than for the application in retardation layers.

Further, the liquid-crystalline polyethers according to the invention may be used for digital data storage such as on Compact Discs (CDs, both recordable and rewritable) or digital films. Digital films may be of different shapes, e. g., tape, cards, and disks which cannot be written or read as specified by the CD standard. Especially suited to be used are polyethers which are neither cross-linked nor cross-linkable. The orientation in these CDs or films may be either homeotropic or uniform planar. For digital media various reading out principles may be employed. For instance, in the case of homeotropic orientation (i.e., perpendicular to the substrate), dichroic dye may be blended in, making it possible to read out data via the difference in absorption. Further, in the case of homeotropic as well as uniform planar orientation contrast results from an isotropic pit or trace giving a different optical path length from a homeotropic or uniform planar background. Because of this difference in path lengths, there is interference by the portion of the incident light beam which falls adjacent to the pit with the portion which falls within the pit. Generally, the different phenomena are active within the CD simultaneously, and it is impossible to tell precisely where exactly the contrast originates.

Here also it was found that because of the low viscosity of the liquid-crystalline polyether according to the invention it is possible to attain rapid and, above all, homogeneous orientation.

When the film or CD contains dichroic dye, its orientation will be along the same lines as that of the mesogenic groups of the liquid-crystalline polyether. The term dichroic dye refers to a dye which in an oriented medium (e.g., a nematic liquid-crystalline phase) will have a dichroic ratio (absorption $_{\parallel}$ /absorption $\perp$) > 1 in the desired wavelength range, absorption $_{\parallel}$ standing for the absorption of light which is polarised parallel with the orientation direction of the medium, and absorption $\perp$ standing for the absorption of light which is polarised perpendicularly. Dichroic dyes, in other words, will absorb one polarisation direction of the light to a much greater extent than the other ones. In a virgin film or CD the mesogenic groups, and hence the dichroic dye molecules, are oriented perpendicular to the film's surface, and there is only low absorption of the incident light by the dichroic dye molecules. (It should be noted that the polarisation direction of the light is perpendicular to its propagation direction as the incident light travels in many cases perpendicularly towards the film's surface). In the case of local heating or irradiation (e.g., with a laser) of the film or CD to above Tc, the homeotropic orientation is converted to an isotropic one. Rapid cooling causes this local isotropic orientation to be frozen in. In the case of an isotropically written trace or pit, the dichroic dye will likewise be isotropically oriented, resulting in a substantially higher absorption of the incident light. In the isotropic state 2/3 of the dichroic dye molecules -on average- is positioned with the long axis at the CD surface (i.e., on average 1/3 along the x-axis of the plane of the film and 1/3 along the y-axis). The polarisation direction of the incident light now being parallel with the long axis of the dichroic dye molecules, a high absorption is realised.

The dichroic dye can be mixed or incorporated into the liquidcrystalline polyether. In principle, any dichroic dye may be employed, providing it is sufficiently stable to be mixed or incorporated into the liquid-crystalline polyether. As examples of suitable dichroic dyes for blending in may be mentioned D2 manufactured by Merck®, Sudan Orange G, and croconium and squarilium based dyes.

If other read out principles are used than the difference in absorption of dichroic dyes in a homeotropic medium. dichroic dyes are not necessary and the liquid-crystalline polyether may be oriented differently, e.g. uniform planar.

Writing out data with the aid of a solid state laser requires that the liquid-crystalline polyether film be, or be rendered, near-infrared light absorbing. Generally, this is done by blending in or incorporating a near-infrared absorbing dye. Preferably, the same (diode) laser can be employed for writing as well as reading. CDs as specified by the CD standard are read out by a solid-state laser. In the case wherein the read out principle is based on the difference in absorption of dichroic dye in a homeotropic medium, use is made of a dichroic dye which absorbs the laser light during writing and creates a difference in absorption during reading. In such cases it is advisable that the dichroic dye be greatly dichroic but not fully oriented, so that a sufficient quantity of light will be absorbed during the writing. The objective is a light absorption percentage in the range of 2 to 40% of the incident light in the homeotropic (virgin) state. Dichroic near-infrared dyes which can be blended in are, among others, anthraquinone dyes: IR-750®, ex Nippon Kayaku Co. Ltd, LCD 117, ex Nippon Kayaku Co. Ltd, squarilium dyes: NK-2772®, ex Nippon Kankoh - Shikiso Kenkyusho Co.

Ltd.,3-(7-isopropyl-1-methyl)azulene-4-yl-2-ethyl-propionic acid-n-butylester, mentioned in EP-A2-0 310 080 , croconium dyes: ST 172®, ex Syntec.

For high-density CDs lasers having a wavelength in the range of 620 to 680 nm are employed for reading.

The liquid-crystalline glasses according to the invention can be employed also to make high-density CDs based on the difference in absorption principle when dichroic dyes having an absorption maximum in this range are used. Examples of dichroic dyes having an absorption maximum in this range include: azo dyes: SI-361®, ex Mitsui Toatsu Chemicals GmbH, anthraquinone dyes: LCD 116 ® and LCD 118 ®, ex Nippon Kayaku Co. Ltd.,M-137 ®, M-483 ®, SI-497 ®, ex Mitsui Toatsu Chemicals GmbH., squarilium dyes: ST 6/2 ® and ST 5/3 ®, ex Syntec. When other read out principles are used, the 620-680 nm absorbing dyes need not be dichroic.

In principle, the reading out and writing of data in the liquid-crystalline polyether/dye system can take place at different wavelengths. In the caseof reading out with the difference in absorption principle, a dichroic dye will be employed in combination with a writing light absorbing dye. It is advisable that said writing light absorbing dye has hardly any orientation, or is not very dichroic, since otherwise absorption during the writing would be unsatisfactory. For that reason preference is given to dyes which are not elongated in shape (e.g., molecules in platelet form or spherical molecules). These writing light absorbing dyes can be incorporated into the liquid-crystalline polyether or blended in.

Ordinarily speaking, a film or CD is made by applying a solution of the polyether onto a substrate and evaporating the solvent. Suitable substrates include PET, PET-ITO, metal, glass, cellulose acetate, polycarbonate, polycarbonate-Al, silicon, amorphous polyolefins, etc. Generally, these substrates are provided with a thin layer of metal such as aluminium or gold. Usually, films having a thickness of 0.2 to 10 micrometers are employed.

Homeotropic orientation of the liquid-crystalline material can be attained in several ways:

1. By treating the surface of the substrate with homeotropic orientation inducing surfactants. These may be, int. al., silanes, higher alcohols, and the like, e.g., n-dodecanol and Liquicoat® PA, ex Merck.
2. By poling the liquid-crystalline layer in a magnetic or electric field. The electric field may be generated by corona poling (using a sharp needle or a thin wire as electrode). There will have to be a counter-electrode on the other side of the liquid-crystalline layer (e.g., an ITO-layer, a metal layer, or a conductive polymer layer), so that the poling field will be positioned over the liquid-crystalline layer. Alternatively, the liquid-crystalline layer may be provided with a conductive layer on either side, and an electric field applied thereto.

Both when homeotropic films are produced by means of a surface treatment and in the case of poling, the viscosity and the layer thickness of the polyether film are of importance.

Uniform planar orientation can likewise be obtained by surface treatment, or by shearing. Since the liquid-crystalline polyethers according to the invention have a low viscosity between Tg and Tc, they can be made into fine uniform planar films or CDs.

Since poling is one of the easiest ways of obtaining homogeneous homeotropic orientation, the use of polable liquid-crystalline polyethers is preferred for digital data storage. Such polyethers have been described hereinbefore.

The liquid-crystalline polyethers according to the invention can easily be made into homogeneously light scattering films which, after the addition of suitable dyes, permit local isotropic writing with a laser or some other source of heat. Especially suitable for use are polyethers which are not, or cannot be, cross-linked. Thus, the liquid-crystalline polyethers according to the invention are rendered serviceable also for low density digital storage and analog data storage. The term analog data storage refers both to human readable rewritable displays such as smart cards and thermal paper and to machine readable media (such as media which can be read with a bar code reader, e.g., labels). The films can be prepared by spin coating, meter bar coating, melt coating, screen printing, and any other conventional technique for coating on a substrate. Suitable substrates are of PET, glass, polycarbonate, PVC, ABS, polystyrene, metal, and paper. The films may have different formats, such as disks, cards, and tape. A homogeneously scattering film is obtained by heating the film to above Tc and then leaving it to cool to room temperature. The creation of small domains gives a scattering texture.

To increase the contrast between the written and the virgin sections, a contrast layer can be applied beneath the liquid-crystalline polyether layer. This may be a refelecting layer, which may be of any material reflecting light. Examples include metal substrates or foils of copper, aluminium, gold, silver, nickel, steel, metallised plastic substrates or foils such as aluminised PET, metallised paper, metal coated metal or plastic substrates such as used in the car industry. Alternatively, the contrast layer may be made up of a layer having a low index of refraction, e.g., a thin layer of air. The liquid-crystalline polyether layer may be provided with a protective coating.

If epoxy-functionalised and/or OH-containing dichroic dyes are coreacted with the mesogenic group-containing mono-epoxides and/or OH-containing compounds, respectively, polyethers are formed which can be used as a polariser. Alternatively, it is possible to simply mix the dichroic dyes into the polyether to this end. To make a polariser, the liquid-crystalline polyether according to the invention is applied onto an optically transparant substrate, after which the liquid-crystalline polyether layer is oriented uniformly planarly. The invention is also directed to polarisers comprising a liquid-crystalline polyether containing dye according to the invention.

UV stabilisers can be added to enhance the polyethers' UV stability.

The invention will be further illustrated with reference to a number of purely illustrative, non-limitative examples.

EXAMPLES

Example 1

Synthesis of LC polyethers (general method):

To a mixture of OH-containing compound and 5% of $BF_3Et_2O$ in dichloromethane there was slowly added dropwise, at room temperature, epoxide dissolved in dichloromethane. In the case of acrylate alcohols being used, a pinch of Ionol®, ex Shell, was added. The polymerisation mixture was stirred overnight and then neutralised with solid CaO. After one hour the CaO was filtered off. The polyether was precipitated in ether, washed with ether, and dried under vacuum. The yield was 75-90%.

Synthesis of epoxide monomers:

Example 2

epoxide of methoxyphenyl benzoate (epoxide 1)

Preparation of 4-methoxyphenol-4'oxybenzoate

74.5 g (0.6 mole) of 4-methoxyphenol, 55.3 (0.40 mole) of hydroxybenzoic acid, and 1.24 g (20 mmoles) of boric acid were dissolved in 750 ml of toluene. Next, 2,0 g (20.4 mmoles) of $H_2SO_4$ were added dropwise, and the mixture was refluxed for 26 hours with the formed water being distilled off azeotropically. The toluene was evaporated, and the reaction product was washed twice in 200 ml of diethyl ether/petroleum ether (1:1 (V:V)). The product was twice converted to the crystallised form from 400 ml of acetonitrile and then dried. The yield was 56.1 g (49%).

A mixture of 42.0 g (0.17 mole) of 4-methoxyphenol-4'oxybenzoate, 100 ml (1.25 moles) of epichlorohydrin, and 0.35 g of benzyltrimethyl ammonium chloride was heated to 70°C. Next, a solution of 6.4 g (0.16 mole) of sodium hydroxide in 32 ml of water was dispensed in 2 hours. Following this addition stirring continued for 2 more hours at 70°C. The reaction mixture was cooled to 20°C, and the organic layer was separated from the aqueous one and washed with 50 ml of water. The excess epichlorohydrin was removed by means of vacuum evaporation at a temperature below 50°C. The residue was dissolved in 250 ml of butanol/toluene (1:2 (V:V)) and stirred for 1 hour at 30°C in the presence of a 20%-solution of NaOH (1.49 g). The organic layer was washed with water several times. After vacuum evaporation the crude product was twice converted to the crystallised form from methanol. The yield was 28.5 g (55%).

The epoxide of methoxyphenyl benzoate was used to prepare polyethers by the general method for the synthesis of LC polyethers specified above, using:

- 1,2 ethane diol (OH-1)
- 1,6 hexane diol (OH-2)
- 2,2 dimethyl 1,3 propane diol (OH-3)
- hydroxyethyl methacrylate (OH-4)
- methoxyphenyl-(2,3 dihydroxypropyloxy)benzoate (OH-5)
- nitrophenyl-(2,3 dihydroxypropyloxy)benzoate (OH-6)
- 2,3 dihydroxypropyloxynitrobiphenyl (OH-7)
- 2-ethyl-2-(hydroxymethyl)-1,3-propane diol (OH-8)

OH-5 and OH-6 were prepared in the same manner as the hexyloxy analogon in EP-A2-0 550 105.

The preparation of OH-7 was as follows:
A mixture of 10.75 g (0.050 mole) of 4-hydroxy-4 nitrobiphenyl, 2.50 g (0.062 mole) of sodium hydroxide, and 12.60 g (0.060 mole) of solketal mesylate in 100 ml DMA was heated for 1 hour at 135°C. After cooling to 80°C 25 ml of 4 N HCl were added. After 30 minutes of stirring at 80°C the mixture was cooled to room temperature and poured into 800 ml of water. The precipitate was filtered off, washed with water, and dried. The resulting product was converted to the crystallised form from chloroform. The yield was 10.6 g (73%).

The properties of the obtained polyethers are compiled in TABLE I. In the table the epoxide groups/OH groups ratio is represented as EP/OH. The molecular weight Mw was obtained by means of GPC.

Example 3

epoxide of nitrobiphenyl (epoxide 2)

In a manner analogous to that for the synthesis of the epoxide of methoxyphenyl benzoate, the epoxide of nitrobiphenyl (epoxide 2) was prepared. Using various OH-containing compounds polyethers were prepared by the general method for the synthesis of LC polyethers specified above.

The properties of the resulting polyethers are compiled in TABLE I.

Example 4

epoxide of nitrophenyl benzoate (epoxide 3)

Preparation of 4-nitrophenyl 4'oxybenzoyl epoxypropyl ether

To a solution of 56 g (1 mole) of potassium hydroxide in 225 ml of water were added 69 g (0.5 mole) of p-hydroxybenzoic acid. To this solution were slowly added dropwise, at room temperature, 42 g (0.55 mole) of allyl chloride. Following the addition of the allyl chloride there was refluxing for a further 18 hours. After cooling the reaction mixture separated into two layers. A solution of 28 g (0.5 mole) of potassium hydroxide in 240 ml [of water] was added, and the whole was heated until a homogeneous reaction mixture had formed. After renewed cooling and acidification with concentrated hydrochloric acid 4(allyloxy)benzoic acid was precipitated. This product was recrystallised from 250 ml of glacial acetic acid. 32 g (0.18 mole) of the dried 4(allyloxy)benzoic acid were dissolved in 150 ml of thionyl chloride, whereupon 2 drops of dimethyl formamide were added and the whole was boiled with refluxing. Thionyl chloride was distilled off, and after being cooled the residue was incorporated into 100 ml of dry dichloromethane. After filtration the dichloromethane solution was added, with vigorous stirring, over 1 hour and at a temperature of 5-10°C, to a solution of 23 g of nitrophenol (0.166 mole) in a mixture of 135 ml of dichloromethane and 34.2 ml of pyridine. There was 2 hours of afterstirring at room temperature. 250 ml of dichloromethane were added to the reaction mixture; the whole was washed twice with dilute hydrochloric acid and then washed until neutral. After distilling off of the solvents the residue was converted to the crystallised form from methanol. The yield was 37.6 g (70%).

10 g (33 mmoles) of 4-nitrophenyl 4'oxybenzoyl allyl ether were dissolved in 50 ml of dichloromethane, and 11.2 g (45.5 mmoles) of m-chloroperbenzoic acid were added under nitrogen. After 24 hours' stirring at room temperature 250 ml of dichloromethane were added, and the solution was washed with sodium carbonate solution and then with water until neutral. After drying and distilling off of the solvent the residue was converted to the crystallised form from 250 ml of ethanol. The yield was 8.1 g (77%).

The properties of the resulting polyethers are compiled in TABLE I.

TABLE I

| epoxide | OH compound | EP/OH | Tg | Tc | Mw |
|---|---|---|---|---|---|
| 1 | OH-1 | 5:1 | 43/48 | 136 | 3003 |
| 1 | OH-1 | 10:1 | 43/49 | 138 | 3731 |
| 1 | OH-2 | 5:1 | 41/50 | 130 | 3320 |
| 1 | OH-3 | 5:1 | 42/47 | 113 | 3130 |
| 1 | OH-3 | 10:1 | 42/48 | 119 | 3524 |
| 1 | OH-4 | 4:1 | 20/25 | 79 | 1860 |
| 1 | OH-4 | 10:1 | 39/44 | 119 | 3089 |
| 1 | OH-5 | 5:1 | 45/51 | 146 | 2984 |
| 1 | OH-5 | 10:1 | 46/52 | 141 | 3638 |
| 1 | OH-8 | 3:1 | 45/54 | 121 | 3065 |
| 2 | OH-7 | 5:1 | 65/70 | 81 | 2207 |
| 3 | OH-6 | 5:1 | 58/63 | 130 | 3173 |
| 3 | OH-1 | 5:1 | 52/58 | 122 | 3172 |

The data in TABLE I shows that, despite a fairly low molecular weight, the polyethers according to the invention have a high Tg and a high Tc.

Example 5

1-(2,3-epoxypropyloxy)-4-(p-methoxyphenyl)bicyclo[2,2,2]octane (epoxide 4)

3-Acetyl-1,5-dicyano-3-(p-methoxyphenyl)pentane

Cyanoethylene (53 g, 1.0 mole) was added dropwise to a stirred solution of 82 g (0.5 mole) p-methoxyphenyl acetone and 5.5 ml of a 40% w/v solution of benzyl trimethyl ammonium hydroxide (Triton B) in methanol in 100 g of t-butanol, while the temperature of the solution was maintained between 10 and 15 °C. After stirring the reaction for 4 hours, the almost solid mixture of product was filtered off, washed with methanol, and dried. Yield: 99.2 g (73%).

3-Acetyl-3-(p-methoxyphenyl)pentane-1,5-dicarboxylic acid

A mixture of 17.8 g (0.44 mole) of NaOH, 175 g of water and 40 g (0.15 mol) of 3-acetyl-1,5-dicyano-3-(p-methoxyphenyl)pentane was refluxed overnight. Concentrated hydrochloric acid was added to the cooled solution and the product separated as an oil. The oil was taken up in 100 ml of dichloromethane. Upon standing and cooling to 0 °C the pure acid precipitated as a white solid. Yield: 39.5 g (87%).

4-Acetyl-4-(p-methoxyphenyl)cyclohexanone

A solution of 38.0 g (0.14 mole) of 3-acetyl-3-(p-methoxyphenyl)pentane- 1,5-dicarboxylic acid and 0.31 g of potassium acetate in 140 ml of acetic anhydride was refluxed for 2 hours. The excess acetic acid was removed at reduced pressure, after which the temperature was raised to 250 °C in order to pyrolyze the residue and to distill the formed cyclohexanone (pressure 0.05 mbar). 23.0 g (79%) of distillate were collected which rapidly solidified. The product was used witnout further purification.

1-Hydroxy-4-(p-methoxyphenyl)bicyclo[2,2,2]octan-3-one

A solution of 23.0 g (0.11 mole) of 4-acetyl-4-(p-methoxyphenyl)cyclo-hexanone and 19.2 g (0.29 mole) of KOH in 200 ml of water was heated at 70 oC for 6 hours. After cooling the precipated product was filtered off, washed with water, and dried in vacuo. Yield: 18.9 g (82%), m.p. 159-160 °C.

1-Hydroxy-4-(p-methoxyphenyl)bicyclo[2,2,2]octane

A solution of 10.0 g (0.048 mole) of 1-hydroxy-4-(p-methoxyphenyl)bicyclo[2,2,2]octan-3-one and 7.36 g (0.15 mole) of hydrazine monohydrate in 40 ml of triethylene glycol was subsequently heated at 100 °C (3 hrs) and 165 °C (15 min.). The solution was cooled to 60 °C and an equally warm solution of 9.28 g (0.14 mole) of KOH in 40 ml of triethylene glycol was added. The vessel was equipped with a Dean-Stark trap, and the mixture was heated at 105 °C for one hour and then at 185 °Cfor half an hour. The cooled solution was added to 150 ml of water and washed with dichloromethane (3 x 100 ml). The combined organic layers were washed with 50 ml 2 N HCl and 50 ml of water, dried and evaporated to dryness. Yield: 7.83 g (84%). The product was purified by recrystallization from toluene.

1-Allyloxy-4-(p-methoxyphenyl)bicyclo[2,2,2]octane

To a solution of 2.0 g (10 mmoles) of 1-hydroxy-4-(p-methoxyphenyl)bicyclo[2,2,2]octane in 15 ml of sieve dried DMF under $N_2$ was added 0.52 g (13 mmoles) of a 60 % NaH dispersion in oil. After stirring at room temperature for 4 hours the evolution of hydrogen had stopped. There was added 70 mg (0.19 mmol) of tetrabutyl ammonium iodide and (dropwise) 1.56 g (13 mmoles) of a solution of allyl bromide in 5 ml DMF. The resultant reaction mixture was stirred for an additional 2 hours, poured into 150 ml of water, and washed with diethyl ether (3 x 50 ml). The combined organic layers were washed with 50 ml of water and 50 ml of brine, dried and evaporated to dryness. The crude product was purified by column chromatography ($SiO_2$, eluent diethyl ether), and there was obtained 1.0 g (43%) of 1-allyloxy-4-(p-methoxyphenyl)bicyclo[2.2.2]-octane, m.p. 62-63 °C.

1-(2,3-epoxypropyloxy)-4-(p-methoxyphenyl)bicyclo[2,2,2]octane

A solution of 1.0 g (4.2 mmoles) of 1-allyloxy-4-(p-methoxyphenyl)bicyclo[2,2,2]octane and 1.9 g of 50% (5.4 mmoles) of m-chloroperbenzoic acid in 10 ml of sieve dried dichloromethane was stirred at room temperature overnight. The reaction mixture was diluted with 10 ml of dichloromethane, washed with a 10% aqueous solution of sodium

carbonate (2 x 20 ml), water (20 ml), and brine (20 ml), dried and evaporated to dryness. The crude product was recrystallized from methanol, yield 0.15 g (14 %).

Example 6

1-bromo-4-(p-2,3-epoxypropyloxyphenyl)bicyclo[2,2,2] octane (epoxide 5)

1-Bromo-4-(p-hydroxyphenyl)bicyclo[2,2,2]octane

To a solution of 2.7 g (0.14 mmoles) of 1-hydroxy-4-(p-methoxyphenyl)bicyclo[2.2.2]octane in 50 ml of sieve dried dichloromethane was added dropwise a solution of 8.8 g (0.35 mmoles) of boron tribromide in 50 ml of sieve dried dichloromethane at 0 °C. The solution was stirred overnight and allowed to re-attain room temperature. The solution was poured in 400 ml of water, and the aqueous phase was extracted with dichloromethane (2 x 100 ml). The combined organic layers were washed with a 10% aqueous solution of sodium carbonate (100 ml) and water (100 ml), dried and evaporated to dryness. Yield 3.2 g (93%). The product was used without further purification.

1-Bromo-4-(p-2,3-epoxypropyloxyphenyl)bicyclo[2,2,2]octane

A solution of 3.0 g (0.12 mmoles) of 1-bromo-4-(p-hydroxyphenyl)bicy-clo[2,2,2]octane and 0.023 g (0.012 mmoles) of benzyl trimethyl ammoniumchloride in 9.0 g (0.99 mmoles) of epichlorohydrin was stirred at 70 °C. A solution of 1.0 g (0.26 mmoles) of NaOH in 7.5 ml of water was gradually added during 2.5 hours and the mixture was stirred overnight. 10 ml of water and 25 ml of dichloromethane were added, the organic layer was separated off, and the aqueous layer was extracted with dichloromethane (2 x 25 ml). The combined organic layers were washed with water (25 ml) and brine (25 ml), dried, and evaporated to dryness. The crude product was crystallized from methanol; yield 3.2 g (86%), m.p. 112-115 °C.

The epoxides 4 and 5 were used in the liquid-crystalline polyethers according to the invention to alter the dispersion of retardation layers made of these liquid-crystalline polyethers.

Example 7 comparative example

For comparison a polyether was prepared by polymerising epoxide 1 via cationic ring-opening, i.e., without an OH-containing compound. The absolute molecular weight ($Mn_{abs}$) of this comparison polyether was determined with the aid of size exclusion chromatography with viscosity detection, and the molecular weight derived from the number of OH end groups ($Mn_{tfaa}$) was also determined. From the poor correlation of these two molecular weights it can be inferred that this polyether contained many side reaction products, notably cyclic oligomers (see TABLE II). It is clear from TABLE II that difference between the two molecular weights is much smaller in the case of polyethers according to the invention, and from this it can be inferred that these polyethers contain fewer cyclic oligomers as side products. At an EP/OH ratio of 10:1 the polymerisation process was found to proceed essentially via the activated monomer mechanism still, although, as the differences between the two molecular weights make clear, a small quantity of cyclic oligomers had formed. All this was confirmed by GPC measurements showing the formation of a cyclic oligomer peak at an EP/OH ratio of 10:1. The GPC image for the comparison polyether showed a large cyclic oligomer peak. Further, the comparison polyether's molecular weight distribution was found to be broad. At an EP/OH ratio of 5:1 a very narrow peak was obtained, in which the cyclic oligomer peak could be detected hardly if at all.

TABLE II

| epoxide | OH compound | EP/OH | $Mn_{abs}$[1] | $Mn_{tfaa}$[2] | $Mn_{abs}/Mn_{tfaa}$ |
|---|---|---|---|---|---|
| 1 | OH-5 | 5:1 | 2800 | 2778 | 1.01 |
| 1 | OH-5 | 10:1 | 3000 | 3288 | 0.91 |
| 1 | OH-1 | 5:1 | 2700 | 2739 | 0.99 |
| 1 | OH-1 | 10:1 | 3100 | 2980 | 1.04 |
| 1 | - | - | 1900 | 3272 | 0.58 |

[1] the absolute molecular weights were determined by size exclusion chromatography (SEC) with viscosity detection and application of the Mark-Houwink relationship.

[2] trifluoroacetic anhydride was used to convert terminal OH groups into trifluoroacetyl groups. $Mn_{tfaa}$ was calculated from the integration of α-protons vis-à-vis trifluoroacetyl groups and aromatic protons.

Example 8

The cross-linking of methacrylate-containing polyether

1.5 g of polyether obtained from epoxide 1 and OH-4 (EP/OH 4:1), 50 mg of an 80/20 mixture of bisphenol A diglycidyl ether diacrylate and tripropylene glycol diacrylate, and 10 mg of Irgacure 369®, ex Ciba Geigy, were dissolved in 3 ml of dichloromethane. The solution was filtered and a film was provided on a glass substrate by means of bar coating. The film was cross-linked by means of 1 minute's irradiation with UV light under an atmosphere of nitrogen in the isotropic phase.

It was found that the resulting cross-linked film could no longer be dissolved in dichloromethane. The Tg after cross-linking was 48/59°C, the Tc 77°C. This shows that the Tg of a polyether according to the invention can be increased by cross-linking.

A film of the same material was applied between two glass plates, and uniform planar orientation was achieved by shearing. The film was cross-linked by 1 minute's irradiation with UV light under an atmosphere of nitrogen at room temperature. After being heated to above Tc and then cooled down to room temperature, the film reattained its uniform planar orientation, whereas a film which was cross-linked in the unoriented state was found to have acquired a light scattering structure after being heated to above Tc. The same was found in the case of an oriented, non-cross-linked film being heated. This shows that cross-linking enhances the stability of uniform planar orientation.

Example 9

Polyethers provided with acrylate end groups and cross-linking

5 g of polyether obtained from epoxide 1 and OH-3 (EP/OH 5:1), 0.93 g (6 mmoles) of isocyanatoethyl acrylate, a pinch of Ionol®, ex Shell, and 3 drops of dibutyltin diacetate were dissolved in 30 ml of dry THF. After 3 days of stirring at room temperature the reaction mixture was precipitated in 500 ml of ether. The product was washed with ether and dried. The yield was 5.0 g (89%), the Tg 44/49°C, and the Tc 87°C.

0.5 g of acrylate-containing polyether as obtained above and 10 mg of Irgacure 369®, ex Ciba Geigy, were dissolved in 1 ml of cyclopentanone. The solution was filtered, and a 7 µm thick film was applied onto a glass substrate by means of bar coating. The film was cross-linked by 1 minute's irradiation with UV light under nitrogen in the isotropic phase.

It was found that the resulting cross-linked film could no longer be dissolved in dichloromethane. The Tg was 50/60°C, the Tc 94°C. Also in this case the Tg was increased by cross-linking.

Example 10

Application in retardation layer:

Used were two glass substrates of a thickness of 100 micrometers. These substrates were coated with a thin layer of Merck Liquicoat® PI, which was precured at 60°C for 15 minutes, cured at 300°C for one hour, and then rubbed in the desired direction with a felt cloth in accordance with the Merck® instructions. To ensure proper adhesion of the PI layer the glass substrates were cleaned in advance, using the following procedure:

- ultra-sonic cleaning with a detergent (Q9, Purum GmbH)
- KOH (1 M), 50°C/l hr
- $HNO_3/H_2SO_4/H_2O$ (1:1:2), 60°C/l hr
- refluxing in isopropyl alcohol vapour for 30 minutes.

There was flushing with demineralised water between all of the cleaning steps. This is a variation of the method described by W.H. de Jeu in Physical Properties of Liquid Crystals, 1st ed., Gordon and Breach Science Publishers, p. 23.

Polyether of OH-5 and epoxide 1 (EP/OH 5:1) was dissolved in cyclopentanone together with 5 wt.% of chiral dopant (Merck CB 15®). To the filtered solution 0.5 wt.% (calculated on LC polyether) of cross-linked polymer spheres (Dynospheres DL-1060®, ex JSR) was added as spacers. The solution of polyether with spacers was spin coated onto the two pretreated glass substrates. The layer thickness obtained was 4 micrometers. The two polyether films were dried in a vacuum oven for 16 hours at 20°C. They were then placed one on top of the other under a 60° difference in orientation direction and moulded at a temperature of 160°C. Next, the sample was cooled to 115°C, and after 5 minutes to room temperature. The quality of the resulting retardation film was determined with the aid of various optical techniques such as described in E.P. Raynes, "Molecular Crystals," Liquid Crystals Letters 4(3-4) (1987), 69-75. The birefringence was 0.17-0.18.

Application for analog data storage:

Polyether of OH-5 and epoxide 1 (EP/OH 5:1) was dissolved in cyclopentanone and filtered. Using a meter bar, the solution was applied onto a 100 micrometers thick Alu-PET substrate (based on Melinex 401®, ex ICI). The solvent was removed by drying at room temperature for 5 minutes and heating to 60°C for 15 minutes. Obtained was a film with a thickness of about 6 micrometers. The liquid-crystalline polyether film was provided with a protective coating based on Actilane 200®, ex Akros Chemicals.

The film was rendered homogeneously light scattering by heating to 134°C immediately followed by cooling to about 20°C. Writing with a thermal printing head gave a very good contrast.

## Claims

**1.** A liquid-crystalline polyether obtained by polymerizing a monomer mixture comprising:

a) an OH-containing compound and
b) a mesogenic group-containing mono-epoxide, characterized in that the epoxy groups/OH groups ratio in the monomer mixture is in the range of 10:1 to 2:1, that the OH-containing compound is a OH-containing compound according to the formula below:

$$HO-(Y)_m-Z$$

wherein:

Z stands for -H, $-O-C(O)-CH=CH_2$, or $-O-C(O)-C(CH_3)=CH_2$,
Y stands for $-CH_2-$, $C(CH_3)_2-$, $-CH(CH_3)-$, or $-HC[-(CH_2)_m-O-\phi^1-(Q)_n-\phi^2-R^1]$, wherein the various Y groups may be the same or different,
m stands for an integer from 0-6, with the proviso that compounds having an oxygen atom in the $\alpha$ or $\beta$ position vis-à-vis the OH group are excluded,
Q stands for -C(O)-O-, -C=C-, or -O-C(O)-
$R^1$ stands for $-O-R^2$, $-NO_2$, or $-R^2$,
$R^2$ stands for an alkyl group having 1-15 carbon atoms,
x stands for an integer from 0-6,
k stands for an integer from 0-6, with the proviso that k is not 0 or 1 if $R^1= O-R^2$,
$\phi^1$ stands for a substituted or unsubstituted phenyl,
$\phi^2$ stands for phenyl,
n stands for 0 or 1;

and that the mesogenic group-containing mono-epoxide group satisfies one of the formulae below:

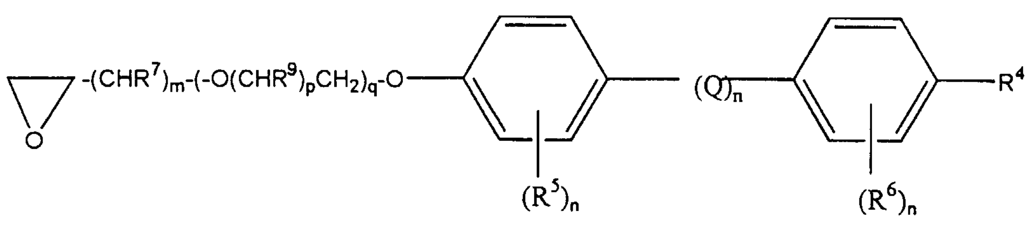

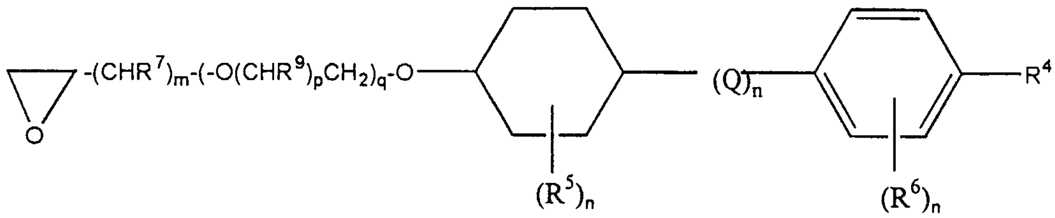

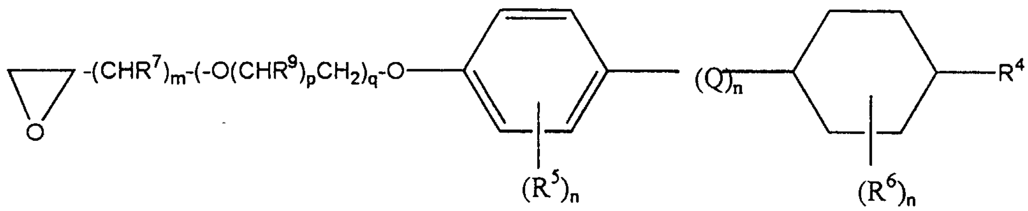

wherein Q stands for -C(O)-O-, -C=C-, -O-C(O)-, -N=C-,-C=N-, -C≡C-, or -N=N-,
$R^4$ stands for -O-$R^8$, COO-$R^8$, OCO-$R^8$, -$NO_2$, -CN, -HC=C$(CN)_2$, -C(CN)=C$(CN)_2$ or -$R^8$,
$R^5$ stands for an alkyl group having 1-5 carbon atoms,
$R^6$ stands for an alkyl group having 1-5 carbon atoms,
$R^7$ stands for -H or $CH_3$,
p is 1-7,
q is 0-3,
$R^8$ stands for a group having 1-15 carbon atoms,
$R^9$ stands for -H or alkyl, and n and m have the same meaning as in the formulae above.

**2.** The liquid-crystalline polyether of claim 1 wherein the OH-containing compound is a compound according to any one of the formulae below:

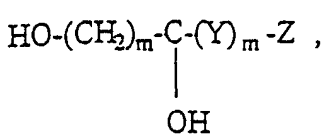 , 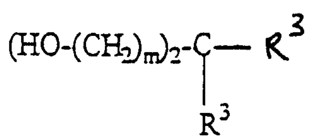

$$HO\text{-}(Y)_m\text{-}O\text{-}\phi^1\text{-}(\phi^2)_n\text{-}O\text{-}(Y)_m\text{-}OH$$

$$HO\text{-}(Y)_m\text{-}O\text{-}\phi^1\text{-}C(CH_3)_2\text{-}\phi^2\text{-}O\text{-}(Y)_m\text{-}OH$$

wherein $R^3$ stands for an alkyl group having 1-6 carbon atoms, and Z, Y, $\phi^1$, $\phi^2$, n, and m have the same meaning as in the formula above, with the m numbers being the same or different.

**3.** The liquid-crystalline polyether of claim 1 or 2 wherein the mesogenic group-containing epoxide comprises a permanent dipole moment directed along the long axis of the mesogenic group.

**4.** The liquid-crystalline polyether of any one of claims 1-3 wherein the liquid-crystalline polyether is cross-linked or cross-linkable.

**5.** Use of a liquid-crystalline polyether of any one of claims 1-4 in a retardation layer.

**6.** A retardation layer in which the liquid-crystalline polyether of any one of claims 1-4 is employed.

**7.** The retardation layer of claim 6 wherein a liquid crystalline polyether with a chiral center is employed.

**8.** The retardation layer of claim 6 or 7 wherein a cross linked or cross-linkable liquid-crystalline polyether is employed.

**9.** Use of the liquid-crystalline polyether of any one of claims 1-4 in a compact disk.

**10.** A digital film in which the liquid-crystalline polyether of any one of claims 1-4 is employed.

**11.** Use of the liquid-crystalline polyether of any one of claims 1-4 in a digital film.

**12.** A compact disk wherein the liquid-crystalline polyether of any one of claims 1-4 is employed.

**13.** The compact disk according to claim 12 wherein the liquid-crystalline polyether is homeotropically oriented and in which a dichroic dye is present.

**14.** An analog data storage medium wherein the liquid-crystalline polyether of any one of claims 1-4 is employed.

**15.** Use of the liquid-crystalline polyether of any one of claims 1-4 in an analog data storage medium.

**16.** Use of the liquid-crystalline polyether of any one of claims 1-4 in a human readable, rewritable display.

**17.** A human readable, rewritable display wherein the liquid-crystalline polyether of any one of claims 1-4 is employed.

**18.** A polarizer wherein the liquid-crystalline polyether of any one of claims 1-4 is employed.

**19.** A polarizer wherein a cross-linked or cross-linkable liquid-crystalline polyether of any one of claims 1-4 is employed.

**20.** Use of the liquid-crystalline polyether of any one of claims 1-4 in a polarizer.

**21.** A process for the preparation of the liquid-crystalline polyether of any one of claims 1-4 wherein a monomer mixture comprising a) an OH-containing compound and b) a mesogenic group-containing epoxide is polymerized in the presence of a cationic polymerization catalyst.

**22.** A cholesteric reflector wherein the liquid-crystalline polyether of any one of the claims 1-4 is employed.

**23.** A cholesteric polarizer wherein the liquid-crystalline polyether of any one of the claims 1-4 is employed.

**Patentansprüche**

**1.** Flüssigkristalliner Polyether, erhalten durch Polymerisieren einer Monomermischung, enthaltend:

a) eine OH-enthaltende Verbindung, und
b) ein mesogene Gruppen enthaltendes Monoepoxid, dadurch gekennzeichnet, dass das Epoxy-Gruppen/OH-Gruppen-Verhältnis in der Monomermischung im Bereich von 10:1 bis 2:1 liegt, wobei die OH-enthaltende Verbindung eine Verbindung der folgenden Formel ist:

$$HO\text{-}(Y)_m\text{-}Z$$

worin

Z bedeutet -H, $-O-C(O)-CH=CH_2$ oder $-O-C(O)-C(CH_3)=CH_2$,
Y bedeutet $-CH_2-$, $C(CH_3)_2-$, $-CH(CH_3)-$ oder $-HC[-(CH_2)_m\text{-}O\text{-}\Phi^1\text{-}(Q)_n\text{-}\Phi^2\text{-}R^1]$, worin die verschiedenen Y-Gruppen gleich oder verschieden sein können, m eine Ganzzahl von 0-6 mit der Massgabe bedeutet, dass Verbindungen, die in α- oder β-Stellung zur OH-Gruppe ein Sauerstoffatom aufweisen, ausgeschlossen sind,
Q bedeutet -C(O)-O-, -C=C- oder -O-C(O)-,
$R^1$ bedeutet $-O-R^2$, $-NO_2$ oder $-R^2$,
$R^2$ bedeutet eine Alkylgruppe mit 1-15 Kohlenstoffatomen,

x bedeutet eine Ganzzahl von 0-6,
k bedeutet eine Ganzzahl von 0-6 mit der Massgabe ist, dass k nicht 0 oder 1 ist, wenn $R^1$ gleich O-$R^2$ ist,
$\Phi^1$ bedeutet substituiertes oder unsubstituiertes Phenyl,
$\Phi^2$ bedeutet Phenyl,
n bedeutet Null oder 1,

und dass die mesogene Gruppen enthaltende Monoepoxidgruppe einer der folgenden Formeln entspricht:

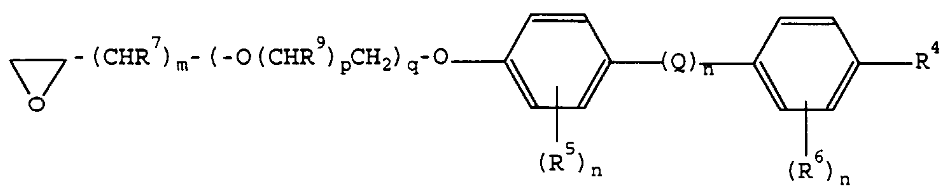

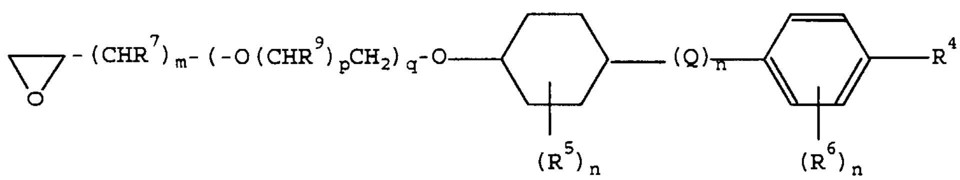

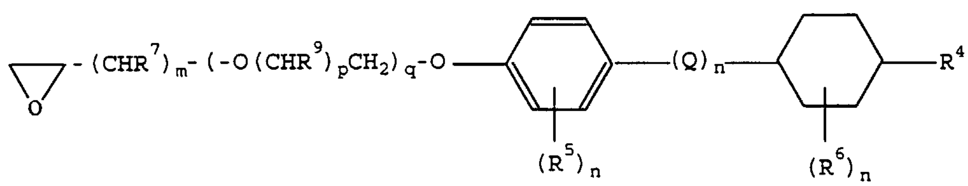

worin

Q bedeutet -C(O)-O-, -C=C-, -O-C(O)-, -N=C-, -C=N-, -C≡C-, oder -N=N-,
$R^4$ bedeutet -O-$R^8$, COO-$R^8$, OCO-$R^8$, -$NO_2$, -CN, -HC=C(CN)$_2$ oder -$R^8$,
$R^5$ bedeutet eine Alkylgruppe mit 1-5 Kohlenstoffatomen,
$R^6$ bedeutet eine Alkylgruppe mit 1-5 Kohlenstoffatomen,
$R^7$ bedeutet -H oder $CH_3$,
p ist 1-7,
g ist 0-3,
$R^8$ bedeutet eine Gruppe mit 1-15 Kohlenstoffatomen,
$R^9$ bedeutet -H oder Alkyl, und wobei n und m die gleiche Bedeutung wie in den obigen Formeln haben.

**2.** Flüssigkristalliner Polyether gemäss Anspruch 1, bei dem die OH-enthaltende Verbindung eine Verbindung gemäss einer der folgenden Formeln ist:

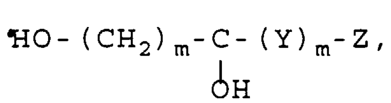

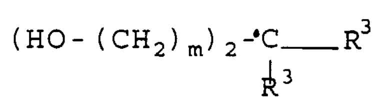

$$HO\text{-}(Y)_m\text{-}O\text{-}\Phi^1\text{-}(\Phi^2)_n\text{-}O\text{-}(Y)_m\text{-}OH$$

$$HO\text{-}(Y)_m\text{-}O\text{-}\Phi^1\text{-}C(CH_3)_2\text{-}\Phi^2\text{-}O\text{-}(Y)_m\text{-}OH$$

worin $R^3$ eine Alkylgruppe mit 1-6 Kohlenstoffatomen bedeutet und Z, Y $\Phi^1$, $\Phi^2$, n und m die gleiche Bedeutung wie in der obigen Formel haben, wobei die Zahlen für m gleich oder verschieden sein können.

**3.** Flüssigkristalliner Polyether nach Anspruch 1 oder 2, bei dem das mesogene Gruppen enthaltende Epoxid ein permanentes Dipolmoment besitzt, dessen Richtung längs der Achse der mesogenen Gruppen verläuft.

**4.** Flüssigkristalliner Polyether nach einem der Ansprüche 1-3, bei dem der flüssigkristalline Polyether vernetzt oder vernetzbar ist.

**5.** Verwendung eines flüssigkristallinen Polyether nach einem der Ansprüche 1-4 in einer Verzögerungsschicht.

**6.** Verzögerungsschicht, in welcher der verwendete flüssigkristalline Polyether ein solcher gemäss einem der Ansprüche 1-4 ist.

**7.** Verzögerungsschicht nach Anspruch 6, in welcher ein flüssigkristalliner Polyether mit einem chiralen Zentrum verwendet wird.

**8.** Verzögerungsschicht nach Anspruch 6 oder 7, bei welcher ein vernetzter oder vernetzbarer flüssigkristalliner Polyether verwendet wird.

**9.** Verwendung des flüssigkristallinen Polyethers nach einem der Ansprüche 1-4 in einer Compactdisc.

**10.** Digitalfilm, in welchem der flüssigkristalline Polyether gemäss einem der Ansprüche 1-4 verwendet wird.

**11.** Verwendung des flüssigkristallinen Polyethers nach einem der Ansprüche 1-4 in einem Digitalfilm.

**12.** Compactdisc, in welcher der verwendete flüssigkristalline Polyether ein solcher gemäss einem der Ansprüche 1-4 ist.

**13.** Compactdisc nach Anspruch 12, bei welcher der flüssigkristalline Polyether homeotrop orientiert ist und wobei ein dichroitischer Farbstoff vorhanden ist.

**14.** Speichermedium für Analogdaten, in welchem der flüssigkristalline Polyether gemäss einem der Ansprüche 1-4 verwendet wird.

**15.** Verwendung des flüssigkristallinen Polyethers nach einem der Ansprüche 1-4 in einem Speichermedium für Analogdaten.

**16.** Verwendung des flüssigkristallinen Polyethers nach einem der Ansprüche 1-4 in einer normal lesbaren, wiederholt beschreibbaren Anzeige.

**17.** Normal ablesbare, wiederbeschreibbare Anzeige, bei welcher der flüssigkristalline Polyether nach einem der Ansprüche 1-4 verwendet wird.

**18.** Polarisator, bei dem der flüssigkristalline Polyether nach einem der Ansprüche 1-4 verwendet wird.

**19.** Polarisator, in welchem ein vernetzter oder vernetzbarer flüssigkristalliner Polyether nach einem der Ansprüche 1-4 verwendet wird.

**20.** Verwendung des flüssigkristallinen Polyether gemäss einem der Ansprüche 1-4 in einem Polarisator.

**21.** Verfahren zur Herstellung des flüssigkristallinen Polyethers nach einem der Ansprüche 1-4, bei dem eine Monomermischung, die a) eine OH-enthaltende Verbindung und b) ein mesogene Gruppen enthaltendes Epoxid enthält, in Gegenwart eines kationischen Polymerisationskatalysators polymerisiert wird.

**22.** Cholesterischer Reflektor, in welchem der flüssigkristalline Polyether nach einem der Ansprüche 1-4 verwendet wird.

**23.** Cholesterischer Polarisator, in welchem der flüssigkristalline Polyether gemäss einem der Ansprüche 1-4 verwendet wird.

**Revendications**

**1.** Polyéther cristal liquide obtenu par polymérisation d'un mélange de monomères comprenant:

a) un composé contenant la fonction OH et
b) un mono-époxyde contenant un groupe mésogène.

caractérisé en ce que le rapport des groupes époxy aux groupes OH dans le mélange de monomères est compris dans la gamme de 10:1 à 2:1,

que le composé contenant la fonction OH est un composé contenant la fonction QH représenté par la formule ci-dessous:

$$HO - (Y)_m - Z$$

dans laquelle:

Z est -H, $-O-C(O)-CH=CH_2$ ou $-O-C(O)-C(CH_3)=CH_2$,
Y est $-CH_2-$, $C(CH_3)_2-$, $-CH(CH_3)-$ ou $-HC[-(CH_2)_m-O - \varphi^1- (Q)_n -\varphi^2 -R^1]-$, où les différents groupes Y peuvent être identiques ou différents,
m est un entier de 0 à 6, à la condition que les composés ayant un atome d'oxygène en position $\alpha$ ou $\beta$ par rapport au groupe OH soient exclus
Q est -C(O)-O-, C=C- ou -O-C(O)-,
$R^1$ est $-O-R^2$, $-NO_2$ ou $-R^2$,
$R^2$ est un groupe alkyle ayant 1 à 15 atomes de carbone,
x est un entier de 0 à 6,
k est un entier de 0 à 6, à la condition que k ne soit pas 0 ou 1 si $R^1$ est $-O-R^2$,
$\varphi^1$ est un groupe phényle substitué ou non substitué,
$\varphi^2$ est un groupe phényle,
n est 0 ou 1;

et que le groupe mono-époxyde contenant un groupe mésogène satisfait à l'une des formules ci-dessous: dans lesquelles:

Q est -C(O)-O-, -C=C-, -O-C(O)-, -N=C-, -C=N-, -C≡C- ou -N=N-,
$R^4$ est $-O-R^8$, $COO-R^8$, $OCO-R^8$, $-NO_2$, -CN, $-HC=C(CN)_2$, $-C(CN)=C(CN)_2$ ou $-R^8$,
$R^5$ est un groupe alkyle ayant 1 à 5 atomes de carbone,
$R^6$ est un groupe alkyle ayant 1 à 5 atomes de carbone,
$R^7$ est -H ou $CH_3$,
p est 1 à 7
q est 0 à 3,
$R^8$ est un groupe ayant 1 à 15 atomes de carbone,
$R^9$ est -H ou un groupe alkyle, et

n et m ont la même signification que dans les formules ci-dessus.

**2.** Polyéther cristal liquide suivant la revendication 1, dans lequel le composé contenant la fonction OH est un composé suivant l'une quelconque des formules ci-dessous:

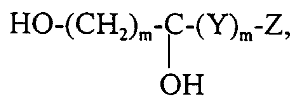

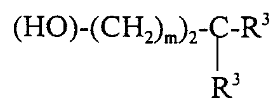

$$HO\text{-}(Y)_m\text{-}O\text{-}\varphi^1\text{-}(\varphi^2)_n\text{-}O\text{-}(Y)_m\text{-}OH$$

$$HO\text{-}(Y)_m\text{-}O\text{-}\varphi^1\text{-}C(CH_3)_2\text{-}\varphi^2\text{-}O\text{-}(Y)_m\text{-}OH$$

dans lesquelles:

| | |
|---|---|
| $R^3$ | est un groupe alkyle ayant 1 à 6 atomes de carbone et |
| Z, Y $\varphi^1$, $\varphi^2$, n et m | ont la même signification que dans la formule ci-dessus, les nombres m étant identiques ou différents. |

**3.** Polyéther cristal liquide suivant les revendications 1 ou 2, dans lequel l'époxyde contenant un groupe mésogène comprend un moment dipolaire permanent dirigé le long de l'axe longitudinal du groupe mésogène.

**4.** Polyéther cristal liquide suivant l'une quelconque des revendications 1 à 3, dans lequel le polyéther cristal liquide est réticulé ou peut être réticulé.

**5.** Utilisation d'un polyéther cristal liquide suivant l'une quelconque des revendications 1 à 4 dans une couche retardatrice.

**6.** Couche retardatrice dans laquelle est employé le polyéther cristal liquide suivant l'une quelconque des revendications 1 à 4.

**7.** Couche retardatrice suivant la revendication 6, dans laquelle est employé un polyéther cristal liquide ayant un centre chiral.

**8.** Couche retardatrice suivant les revendications 6 ou 7, dans laquelle est employé un polyéther cristal liquide réticulé ou pouvant être réticulé.

**9.** Utilisation du polyéther cristal liquide suivant l'une quelconque des revendications 1 à 4 dans un disque compact.

**10.** Film numérique dans lequel est employé le polyéther cristal liquide suivant l'une quelconque des revendications 1 à 4.

**11.** Utilisation du polyéther cristal liquide suivant l'une quelconque des revendications 1 à 4 dans un film numérique.

**12.** Disque compact dans lequel est employé le polyéther cristal liquide suivant l'une quelconque des revendications 1 à 4.

**13.** Disque compact suivant la revendication 12, dans laquelle le polyéther cristal liquide est orienté de façon homéotrope et un colorant dichroïque est présent.

**14.** Milieu pour le stockage de données analogiques, dans lequel est employé le polyéther cristal liquide suivant l'une quelconque des revendications 1 à 4.

**15.** Utilisation du polyéther cristal liquide suivant l'une quelconque des revendications 1 à 4 dans un milieu pour le stockage de données analogiques.

**16.** Utilisation du polyéther cristal liquide suivant l'une quelconque des revendications 1 à 4 dans un afficheur réinscriptible, pouvant être lu par l'homme.

**17.** Afficheur réinscriptible, pouvant être lu par l'homme dans lequel est employé le polyéther cristal liquide suivant

l'une quelconque des revendications 1 à 4.

**18.** Polariseur dans lequel est employé le polyéther cristal liquide suivant l'une quelconque des revendications 1 à 4.

**19.** Polariseur dans lequel est employé un polyéther cristal liquide réticulé ou pouvant être réticulé suivant l'une quelconque des revendications 1 à 4.

**20.** Utilisation du polyéther cristal liquide suivant l'une quelconque des revendications 1 à 4 dans un polariseur.

**21.** Procédé pour la préparation du polyéther cristal liquide suivant l'une quelconque des revendications 1 à 4 dans lequel un mélange de monomères comprenant

a) un composé contenant la fonction OH et
b) un époxyde contenant un groupe mésogène, est polymérisé en présence d'un catalyseur de polymérisation cationique.

**22.** Réflecteur cholestérique, dans lequel est employé le polyéther cristal liquide suivant l'une quelconque des revendications 1 à 4.

**23.** Polariseur cholestérique, dans lequel est employé le polyéther cristal liquide suivant l'une quelconque des revendications 1 à 4.